# EUROPEAN PATENT SPECIFICATION

(11) **EP 2 870 082 B1**
(45) Date of publication and mention of the grant of the patent: **14.09.2016**
(21) Application number: 13765422.4
(22) Date of filing: 21.06.2013
(51) Int. Cl.: B65D 85/816

(54) **CAPSULE FOR MAKING BEVERAGES**
KAPSEL ZUR ZUBEREITUNG VON GETRÄNKEN
CAPSULE PERMETTANT DE RÉALISER DES BOISSONS

(30) Priority: 03.07.2012 IT VR20120133
(43) Date of publication of application: 13.05.2015
(73) Proprietor: Caffitaly System S.P.A., 40041 Gaggio Montano (BO) (IT)
(72) Inventor: DIGIUNI, Paolo, CH-6926 Montagnola (CH); ACCURSI Giovanni, 40046 Porretta Terme (Bologna) (IT)
(74) Representative: Ponchiroli, Simone
(86) International application number: PCT/IB2013/055105
(87) International publication number: WO 2014/006527

(56) References cited:
- EP-A1- 1 867 585
- US-A1- 2005 051 478

## Description

This invention relates to a capsule for making beverages. In particular reference is made to those capsules comprising a body and a lid which closes the top of the body and in which a powdered food substance (for example coffee powder) is positioned, which can be extracted by passing water (which may be pressurised) through it to make a beverage, for example coffee. More specifically reference is made to those capsules in which the body comprises a lower wall and a side wall which form a chamber in which a rigid or semi-rigid filter is positioned.

In more detail, reference is made to those capsules suitable for use in beverage making systems in which the capsule is pierced at the lid, to allow the injection of water (which may be pressurised) into the capsule itself, and at the lower wall, to allow dispensing outside the capsule of the beverage produced by the interaction of the water with the powdered food substance.

In such capsules the filter is substantially a flat filter, normally disk-shaped, positioned close to the lower wall of the capsule body and separates the powdered food substance from the lower wall in such a way that powder does not come out of the capsule after a piercing element has penetrated through the lower wall. In fact, the filter comprises openings which allow the beverage to pass through it in such a way that said beverage can come out of the capsule through the lower wall (through the hole made by the piercing element or through a channel present in the latter). However, at the same time the openings allow the powdered food substance to be retained.

However, this prior art technology may have several disadvantages under certain circumstances.

In particular, with some types and particle sizes of the powdered food substance the prior art capsules may not allow optimum extraction of the powdered food substance. In fact, for example, the beverage made by the interaction between the water and the powder located close to the lid, in order to be able to come out of the capsule must reach the filter and therefore must pass through all of the powder below which may obstruct its path. In fact, once moistened with the water, the powdered food substance tends to become compacted, obstructing the flow of the liquids which encounter increased resistance to permeation through the powder.

In fact, the water injected into the capsule tends to draw the powdered food substance with it, carrying it towards the filter and causing it to build up and become compacted precisely at the filter, therefore increasing the resistance of the powdered food substance to the passage of liquids through it and resulting in difficulties draining the beverage through it.

Therefore, during the injection of water into the capsule, areas are created in the powder which are compacted to different degrees. Therefore, prior art capsules have the disadvantage that the powdered food substance can only be permeated unevenly, that is to say, to drastically different degrees depending on the position of the powdered food substance in the capsule.

Moreover, in prior art capsules, since the water tends to flow in the zones of the powder which are less resistant to permeation, preferential channels for the passage of the water are easily created, the result being that the powdered food substance is not all permeated homogeneously. The prior art is for example disclosed in US 2005/051478 A1. In this context, the technical purpose which forms the basis of this invention is to provide a capsule for making beverages which overcomes the above-mentioned disadvantages.

In particular, the technical purpose of this invention is to provide a capsule for making beverages which allows the water fed in to permeate the powdered food substance more evenly than the prior art capsules.

It is also the technical purpose of this invention to provide a capsule for making beverages which allows limitation, compared with prior art capsules, of the risk of forming highly compacted zones, in the powdered food substance, which could obstruct the flow of the beverage.

This invention also has for a technical purpose to provide a capsule for making beverages which, compared with prior art capsules, promotes water permeation through the entire powdered food substance, limiting the risk of forming in the latter preferential channels for the passage of the water.

The technical purpose specified and the aims indicated are substantially achieved by a capsule for making beverages as described in the appended claims.

Further features and advantages of this invention are more apparent in the detailed description below, with reference to several preferred, non-limiting embodiments of a capsule for making beverages, illustrated in the accompanying drawings, in which:
Figure 1 is an axonometric top view of a capsule according to this invention, cut according to a first vertical cutting plane passing through an axis of extension of it;
Figure 2 is a vertical cross-section of the capsule of Figure 1, according to a second vertical plane passing through the axis of extension and rotated by 22.5° compared with the first cutting plane; it also illustrates an injecting element and a piercing element which respectively pass through the lid and the lower wall;
Figure 3 is a view of the detail III of Figure 2;
Figure 4 is an exploded view of the capsule of Figure 1;
Figure 5 is an axonometric top view, cut according to a first vertical cutting plane passing through an axis of extension of it, of a second embodiment of the filter (or more generally the filter element) of a capsule made according to this invention;
Figure 6 is an axonometric top view of a third embodiment of the filter of a capsule made according to this invention;
Figure 7 is an axonometric top view, cut according to a first vertical cutting plane passing through an axis of extension of it, of the third embodiment of Figure 6; and
Figure 8 is a front view of the filter of Figure 7.

With reference to the accompanying drawings, the numeral 1 denotes in its entirety a capsule for making beverages in accordance with this invention.

This invention relates to a capsule 1 for making beverages comprising at least one powdered food substance which can be extracted by passing water through it to make a beverage. The powdered food substance, for example powdered coffee, can be extracted for example by infusion or is soluble to make a beverage such as coffee or tea, infusions, soups, etc.

The capsule 1 may be suitable for allowing extraction of the powdered food substance, such as coffee, by passing pressurised water through it, for example to make an espresso coffee.

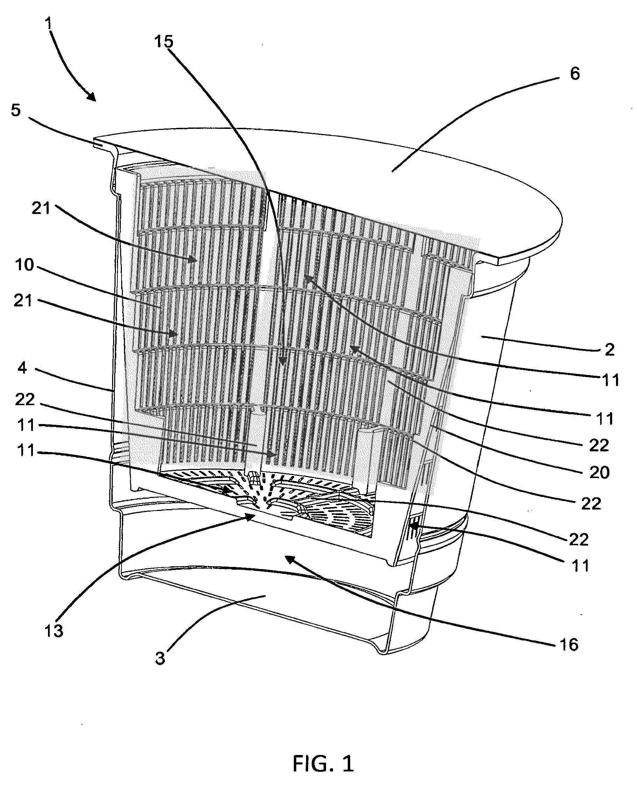

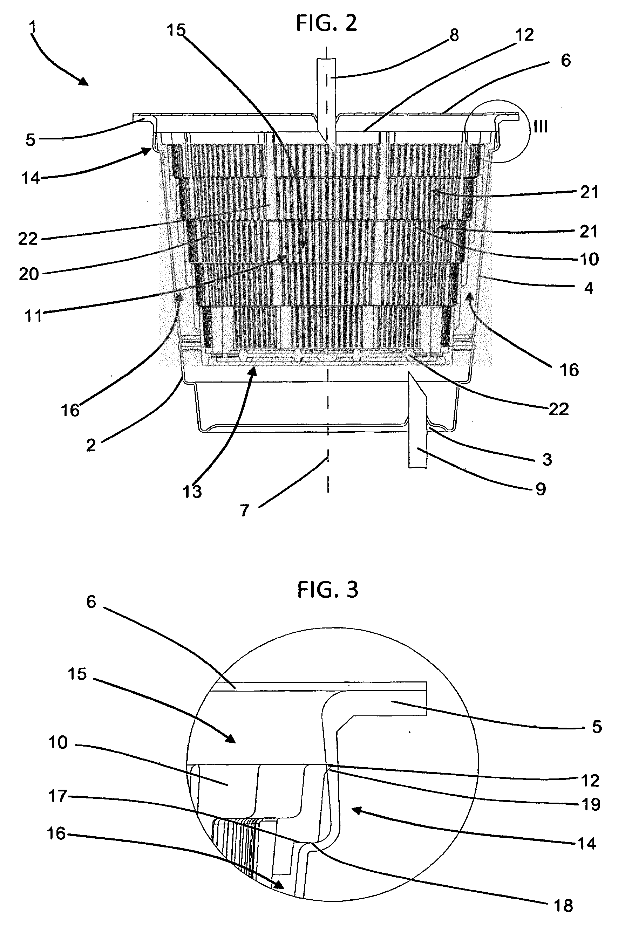

The capsule 1 comprises a substantially cup-shaped body 2 which in turn comprises a lower wall 3 and a side wall 4. In the embodiment illustrated in Figures 1 to 4, the lower wall 3 of the capsule 1 mainly extends in a circular fashion and the side wall 4 extends from it with a shape that to a first approximation is frusto-conical, the upper part of it ending with an edge 5 located on the opposite side to the lower wall 3. A lid 6 is fixed to the body 2 at the edge 5 and closes the top of the capsule 1 body 2. The body 2 and the lid 6 of the capsule 1 may each be made of different materials. The body 2 may, for example, be made of a plastic material whilst the lid 6 may be made of an aluminium sheet. Between the lid 6 and the inner surface of the body 2 there is a chamber. During use of the capsule 1, the beverage is made in the chamber after interaction between the powdered food substance and the water. Between a central point of the lid 6 and a central point of the lower wall 3 is identified an axis of extension 7 of the capsule 1, visible in Figure 2. In the embodiments illustrated the capsule 1 is symmetrical relative to the axis of extension 7.

Advantageously, in the embodiments illustrated, the lid 6 can be pierced to allow water to be injected into the capsule 1 and the lower wall 3 can also be pierced to allow the beverage to come out of the capsule 1. Therefore, hereinafter preferential reference will be made to this solution.

The capsule 1 is therefore suitable for use in a beverage making system which advantageously comprises a housing in which the capsule 1 can be inserted for use for making a beverage, for example coffee. As shown in Figure 2, a system suitable for using the capsule 1 illustrated comprises, in the substantially known way, means for injecting water into the capsule 1, which can be associated with the lid 6, comprising an injecting element 8 such as a needle or a blade comprising a channel for the passage of the water, and it also comprises means for extracting the beverage from the capsule 1, which can be associated with the lower wall 3, said means in turn comprising a piercing element 9 for piercing/penetrating the lower wall 3 of the capsule 1 body 2. In this context, the term piercing element 9 refers to any element, substantially of the known type, able to pierce, cut or tear, for example a spike or a blade, fixed or mobile.

The capsule 1 also comprises a rigid or semi-rigid filter 10 positioned in the chamber. That filter 10, in particular, comprises openings 11 for allowing fluid communication through it. The openings 11 are in fact advantageously able to allow the passage of beverages through them and at the same time to substantially retain the powdered food substance so that, during use of the capsule 1, the beverage can pass through the filter 10 and then come out of the capsule 1 (for example through a hole made by the piercing element 9 in the lower 3 or through a channel made in the piercing element 9) and the powdered food substance can remain substantially trapped inside.

According to this invention, the filter 10 extends between a substantially annular rim 12 of the filter located at the top of the filter 10 and positioned close to the capsule 1 lid 6, and a bottom portion 13 located at the bottom of the filter 10 and positioned close to the lower wall 3.

The filter 10 is coupled to the capsule 1 body 2 at a coupling portion 14 with substantially annular extension about the axis of extension 7 and located on the side wall 4.

According to this invention, the coupling portion 14 is located close to the edge 5 of the side wall 4 and the filter 10 is coupled to the coupling portion 14 substantially at the rim 12. Therefore, advantageously the rim 12 of the filter 10 also has substantially annular extension about the axis of extension 7. The coupling between the filter 10 and the capsule 1 body 2 is described in more detail below.

In accordance with this invention_{,} the filter 10 substantially separates the chamber into a first compartment 15 in which the powered food substance is contained and a second compartment 16. In the preferred embodiments, the piercing element 9, during use, can be inserted in the second compartment 16 without damaging the filter 10, after penetrating through the lower wall 3.

The water injected into the capsule 1 passes through the powdered food substance contained in the first compartment 15. Advantageously, as shown in the accompanying drawings, the rim 12 of the filter 10 substantially delimits an access aperture to the first compartment 15 which in the embodiments illustrated is substantially circular. Therefore, the filter 10 is advantageously open at the top, that is to say, on the side facing towards the lid 6. That solution has two advantages: first, during capsule 1 production, when the lid 6 is separate from the body 2, the powdered food substance can be inserted in the first compartment 15 by simply pouring it into said compartment through the access aperture. Second, as shown in Figure 2, during use of the capsule 1 the injecting element 8 may advantageously pass through the lid 6 and be partly inserted in the first compartment 15 through the access aperture for injecting the water directly into it.

Therefore, in the first compartment 15 the powered food substance interacts with the water injected into the capsule 1 to make the beverage. In contrast, the second compartment 16 is intended, during use, to receive the beverage made in the first compartment 15 and which comes out of the latter through the openings 11 present in the filter 10.

In accordance with this invention, the first compartment 15 is delimited at least between the filter 10 and the lid 6; however, the first compartment 15 may also be delimited by a small annular portion of side wall 4 located between the edge 5 of the side wall 4 itself and the coupling portion 14 (which, as indicated, is close to the edge 5). The first compartment 15 is at least mainly configured as a cavity, delimited by the filter 10, which advantageously extends over most of the volume of the chamber and in which the powdered food substance is positioned.

Also according to this invention, the second compartment 16 is delimited between the filter 10, the lower wall 3 and the portion of side wall 4 located between the lower wall 3 and the coupling portion 14. Moreover, at least part of the second compartment 16 is positioned between the side wall 4 and the filter 10. In other words, the second compartment 16 surrounds at least part of the filter 10. In particular, the second compartment 16 extends along the side wall 4 at least for most of the distance, measured parallel with the axis of extension 7, between the coupling portion 14 and the lower wall 3. In other words, the second compartment 16 surrounds the filter 10 for most of its extension assessed parallel with the axis of extension 7.

According to this invention, the openings 11 are made at least at the part of the second compartment 16 positioned between the filter 10 and the side wall 4. In this way, the openings 11 made in the part of the second compartment 16 positioned between the filter 10 and the side wall 4 allow a reduction, compared with prior art capsules, in the average distance that the water must cover through the powdered food substance in order to be able to come out of the filter 10 (or out of the first compartment 15) in the form of the beverage, with the advantage that the water encounters less resistance to its passage through the substance. Consequently, the filter 10 allows improved filtering of the beverage, a reduced tendency of the powdered food substance to become unevenly compacted and therefore more even permeation of the powdered food substance by the water injected into the capsule 1.

However, advantageously, the openings 11 are also made at the bottom portion 13, thereby increasing the possibility of the beverage coming out of the first compartment and further improving filtering of the beverage.

Even more advantageously, as in the embodiments illustrated in the accompanying drawings, the second compartment 16 extends along the side wall 4 to the coupling portion 14. Since the filter 10 is coupled to the coupling portion 14 at the rim 12, the substantial totality of the filter 10 is surrounded by the second compartment 16. Advantageously, the openings 11 are distributed over the entire surface of the filter 10 surrounded by the second compartment 16, and in particular over the entire surface of the filter 10 which is at the portion of the second compartment 16 located between the filter 10 and the side wall 4. In the embodiments illustrated, advantageously, the openings 11 are evenly distributed around the filter and are grouped together in groups which are in turn substantially distributed in an even way along the extension of the filter 10 between the rim 12 and the bottom portion 13.

As already indicated, the filter 10 is coupled to the side wall 4 at the coupling portion 14. The coupling may be made in various ways.

In the embodiment illustrated in the detail in Figure 3, the filter 10 comprises a shoulder 17, close to the rim 12, with substantially annular extension about the axis of extension 7 and projecting radially relative to the rest of the filter 10, again with reference to the axis of extension 7. In other words, seen in a radial section with reference to the axis of extension 7, the filter 10 comprises a step close to the rim 12. The filter 10 advantageously rests on the coupling portion 14 by means of the shoulder 17. In fact, the coupling portion 14 comprises a counter-shoulder 18 which also has substantially annular extension about the axis of extension 7 and which projects radially, with reference to the axis of extension 7, relative to the portion of side wall 4 adjacent to it on the lower wall 3 side. Therefore, as shown in Figure 3, the shoulder 17 rests on the counter-shoulder 18. In the embodiment illustrated in Figures 1 to 4, the rim 12 is coupled to an annular region 19 of the coupling.portion 14 which is located between the counter-shoulder 18 and the edge 5 of the side wall 4 to which the lid 6 is fixed (Figure 3). Therefore, advantageously, in the preferred embodiments, the filter 10 is in contact with the body 2 of the capsule 1, and in particular with the coupling portion 14, substantially at two annular portions, one corresponding to the rim 12 and another corresponding to the shoulder 17. In particular, the contact between the shoulder 17 and the counter-shoulder 18 allows the filter 10, once inserted in the capsule 1 body 2, to stop at the counter-shoulder 18. In other words, the counter-shoulder 18 acts as a contact element which prevents the filter 10 from being subject to further movements towards the lower wall 3 of the capsule 1. That is particularly useful for keeping the filter 10 in a predetermined position, as described in more detail below.

However the coupling is created between the filter 10 and the coupling portion 14, the filter 10 is advantageously coupled to the coupling portion 14 by mechanical interference, and moreover, in addition or alternatively, the filter 10 is coupled to the coupling portion 14, forming a sealed contact with it, where "sealed contact" in this context advantageously refers to a contact which is watertight. Moreover, the sealed contact may also be useful during capsule 1 production. In fact, during insertion of the powdered food substance in the first compartment 15, advantageously the substance being poured through the access aperture as described above, the sealed contact (at the coupling portion 14) allows a guarantee that the powder cannot accidentally be poured into the second compartment 16 (which would compromise use of the capsule 1 for making the beverage).

The coupling which uses mechanical interference and/or is sealed can be made in various ways.

In the embodiment illustrated in the detail in Figure 3, the mechanical interference coupling is created between the rim 12 of the filter 10 and the above-mentioned annular region 19 of the coupling portion 14. In Figure 3, the rim 12 is shown interpenetrating with the annular region 19, however that illustration is representative of the design dimensions respectively of the filter 10 and the capsule 1 body 2 and does not reflect the real interaction between said elements which obviously cannot coexist in the same space. In particular, said representation implies that the interference contact between the rim 12 and the annular region 19 in reality, advantageously, requires at least one of these to be in a state of deformation (advantageously elastic).

Mechanical interference is possible thanks to the elastic deformability of the rim 12 and/or of the annular region 19, the elasticity advantageously being allowed by the material used to make them and/or by their shape. In the embodiments illustrated, the annular region 19, that is to say, the region of the coupling portion 14 located between the counter-shoulder 18 and the edge 5, is advantageously able to bend. In particular, the annular region 19 presses against the rim 12 of the filter 10 thanks to the elastic deformation to which it is subjected. As shown in Figure 3, the annular region 19, seen in axial section, extends at an angle relative to the axis of extension 7: in particular, proceeding from the edge 5 towards the lower wall 3, the annular region 19 moves away from the axis of extension 7.

Moreover, the coupling portion 14 at the edge 5 or at the part of the annular region 19 adjacent to the edge 5, has a cross-section, perpendicularly to the axis of extension 7, which is advantageously less than the area delimited by the rim 12 in the plane perpendicular to the axis of extension 7. Advantageously, for that reason, during capsule 1 production, the coupling portion 14, and in particular its annular region 19, resists the passage of the rim 12 during the end step of filter 10 insertion in the chamber. Filter 10 insertion in the chamber therefore requires pressure to be applied on the filter 10, directed towards the lower wall 3, at least as the rim 12 passes at the annular region 19. In the preferred embodiment, advantageously, the pressure on the filter 10 is maintained until the shoulder 17 is resting against the counter-shoulder 18, thus creating a snap-on type insertion. That particular shape of the coupling portion 14 and its interaction with the filter 10, and in particular with the rim 12, advantageously prevents removal of the filter 10 from inside the capsule 1 body 2, for example after a thrust applied on the bottom portion 13 of the filter 10 and directed towards the lid 6.

Moreover, advantageously, the sealed contact is also created between the rim 12 of the filter 10 and the annular region 19 of the coupling portion 14. In particular, in the embodiment illustrated, the rim 12 and the annular region 19 are made in such a way that between them there is continuous contact, and the seal is guaranteed by mechanical interference.

The filter 10 may come in various shapes. According to the present invention, however, the filter 10 is substantially cup-shaped and comprises a side portion 20 extending about the axis of extension 7 between the bottom portion 13 and the rim 12. The openings 11 are located at least on the side portion 20, but advantageously they are also located on the bottom portion 13.

The filter 10 substantially determines the shape of the first compartment 15, whilst the shape of the second compartment 16 is determined by the filter 10 together with the capsule 1 body 2. As already indicated, the second compartment 16 is advantageously made in such a way that the piercing element 9 can penetrate through the lower wall 3 of the capsule 1 without damaging the filter 10. The piercing element 9 can pass through the lower wall 3 of the capsule 1 centrally or off-centre as shown in Figure 2.

To avoid contact with the piercing element 9 as it penetrates into the second compartment 16 (if the lower wall 3 can be pierced), the filter 10 will advantageously have a shape that allows the piercing element 9 to enter but at the same time avoids contact with it, considering its dimensions, the related stroke and its positioning.

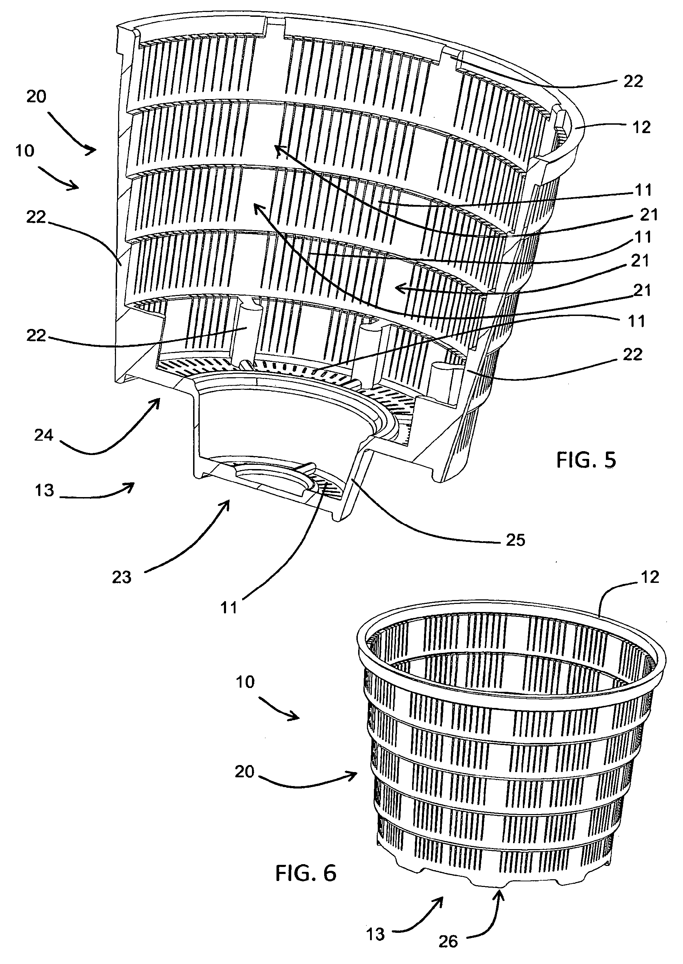

For example, the bottom portion 13 may comprise a recess towards the lid 6 in which the piercing element 9 can be inserted. The dimensions of the recess will be proportionate to those of the piercing element 9 and to the related stroke that it must cover inside the capsule 1 (the distance between the lower wall 3 and the tip of the piercing element 9, when the latter is inserted in the capsule 1). Depending if the piercing element 9 passes through the lower wall 3 centrally or off-centre, the recess will be located respectively at the centre of the bottom portion 13 or off-centre relative to the axis of extension 7, in the latter case having an extension that is advantageously annular about it. This configuration is illustrated in Figure 5 where the bottom portion 12 comprises an outer annular zone 23 and an inner zone 24; the outer annular zone 23 being spaced from the lower wall 3, whilst the inner zone 24 is close to the lower wall 3. The two zones 23, 24 are connected by an auxiliary wall 25 which, together with the inner zone 24, delimits a protuberance having a further cup shape in the lower wall 3. Whilst in the embodiment illustrated in Figure 5 openings 11 are made at the outer annular zone 23 and the inner zone 24 but not at the auxiliary wall 25, in other embodiments either the openings may be made also in the auxiliary wall 25, or they may not be made in the outer annular zone 23 and/or in the inner zone 24. Furthermore, alternatively to the presence of an annular recess, the filter 10 may have a substantially conical shape, the taper being such that it prevents contact with the piercing element 9 even when it is completely inserted (considering its maximum stroke) in the second compartment 16.

Advantageously, in the preferred embodiment of Figures 1 to 4, the bottom portion 13 of the filter 10 is spaced from the lower wall 3 to allow, during capsule 1 use in a system suitable for using it, insertion of the piercing element 9 in the capsule 1, through the lower wall 3, without the bottom portion 13 of the filter 10 being damaged. Moreover, the bottom portion 13 of the filter 10 preferably mainly comprises a flat disk extending in a substantially circular fashion about the axis of extension 7.

In the embodiments illustrated, the position of the counter-shoulder 18 on the coupling portion 14 and the position of the shoulder 17 on the filter 10, are established to determine a distance between the lower wall 3 of the body 2 and the bottom portion 13 of the filter 10 which is greater than the distance between the tip of the piercing element 9 and the lower wall 3 when the piercing element 9 is inserted in the capsule 1.

Again with reference to the shape of the filter 10, it is, as already indicated, in contact with the side wall 4 at the coupling portion 14. Starting from the coupling portion 14 and proceeding towards the lower wall 3, the filter 10 and the side wall 4 are separated from one another, advantageously radially with reference to the axis of extension 7, that is to say, between the side wall 4 of the body 2 and the side portion 20 of the filter 10, there is an empty space which corresponds to the part of the second compartment 16 positioned between the side wall 4 and the filter 10.

The distance between the filter 10 and the side wall 4 at the second compartment 16 increases proceeding towards the bottom portion 13. For example, if the side wall 4 extends in a substantially conical fashion with reference to the axis of extension 7, proceeding from the lid 6 towards the lower wall 3, the side portion 20 of the filter 10 may for example have a similar extension but with a more pronounced taper.

However, according to the present invention, the side portion 20 of the filter 10 has the structure of superposed rings 21, which are concentric about the axis of extension 7 and connected to each other. Each ring 21, proceeding from the rim 12 towards the bottom portion 13 of the filter 10, delimits a respective section of the first compartment 15, in a plane substantially perpendicular to the axis of extension 7, having an area greater than that delimited by the next ring 21. Advantageously, in the embodiments illustrated, the same ring 21 delimits various sections of the first compartment 15 (which are perpendicular to the axis of extension 7) which have decreasing areas proceeding in the direction from the rim 12 towards the bottom portion 13.

In other words, each ring 21, proceeding from the rim 12 towards the bottom portion 13, moves closer to the axis of extension 7. In the preferred embodiments illustrated, each section delimited by a ring 21 is substantially circular and its centre is identified by the intersection with the axis of extension 7. The ring 21 delimiting the section with the smallest area (and advantageously radius), that is to say, the ring 21 closest to the lower wall 3, surrounds the bottom portion 13.

Said structure of the side portion 20 of the filter 10 gives it rigidity and makes its production easier, which advantageously can be carried out using injection moulding.

The side portion 20, seen in radial section relative to the axis of extension 7, comprises, on the side facing towards the first compartment 15, a substantially stepped profile, each step corresponding to one of the rings 21. Advantageously, even on the side facing towards the side wall 4 the side portion 20 of the filter 10 comprises a stepped profile, each step radially recessed, with reference to the axis of extension 7, relative to the adjacent step positioned between it and the rim 12. In other words, the side portion 20 of the filter 10 comprises inner steps, formed by the rings 21, and outer steps, facing towards the side wall 4. As shown in Figures 1, 2 and 4, advantageously, the inner steps and the outer steps are not aligned with each other. In particular, each outer step extends substantially from approximately half the height, measured parallel with the axis of extension 7, of each inner step. In other words, each inner step (or ring 21) is opposite to an outer step only at a portion of the former which advantageously extends over around half of the extension of the inner step (or ring 21) and which in the accompanying drawings corresponds to the half of each ring 21 positioned towards the rim 12.

However, in other embodiments, other side portion 20 configurations and structures are possible.

The openings 11 which allow fluid communication through the filter 10, that is to say, which allow the beverage to pass from the first compartment 15 to the second compartment 16, at least mainly preventing the passage of the powdered food substance which remains confined in the first compartment 15, are, as already indicated, located at least on the portion of the filter 10 which is at the part of the second compartment 16 positioned between the filter 10 and the side wall 4 of the capsule 1 body 2.

Therefore, advantageously, the openings 11 are made at the side portion 20 of the filter 10. In the preferred embodiments illustrated, there are several openings 11 on each of the rings 21. In particular, the openings 11 are formed by slits extending mainly parallel with the axis of extension 7, being arranged side by side. As shown in the accompanying drawings, the slits extend substantially over the entire height of each ring 21 (and therefore of each inner step). However, only the part of each slit extending on the portion of inner step (or ring 21) not opposite to an outer step forms an opening 11.

As already indicated, the openings 11 are advantageously also made in the bottom portion 13 (which mainly has the shape of a flat disk). In the embodiments illustrated, said openings 11 are elongate slots extending on the bottom portion 13 in directions which are radial relative to the axis of extension 7.

However, more generally, whatever the shape of the filter 10 and wherever the openings 11 are positioned, they may have a different shape, orientation, arrangement and dimensions, for example, they may be circular holes, or cross-shaped, elongate slits, curves, etc. Moreover, the filter 10 may comprise different types of openings 11.

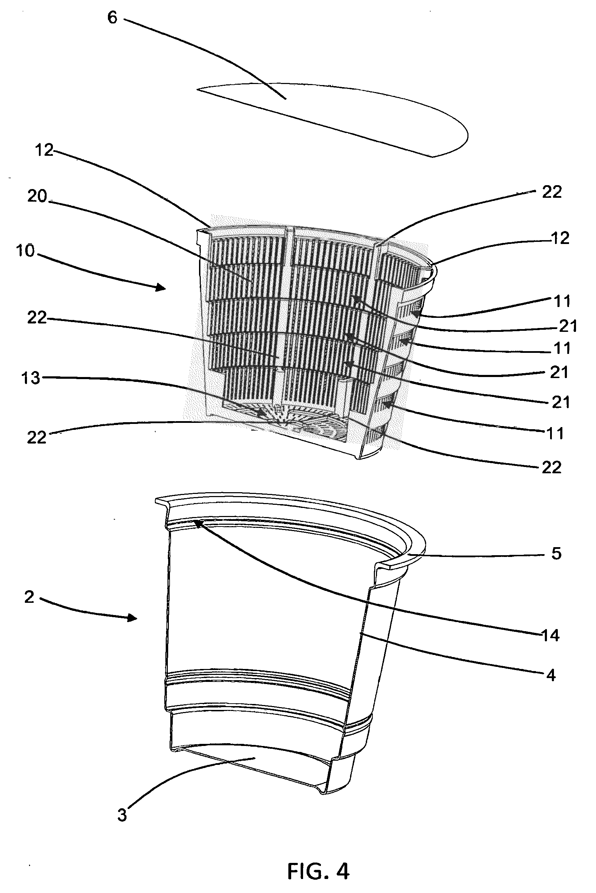

In the preferred embodiments the filter 10 also comprises stiffening ribs 22 which, advantageously, are at least located on the side portion 20 of the filter 10. As shown in the accompanying drawings, advantageously, the ribs 22 of the side portion 20 extend longitudinally from the rim 12 at least to the bottom portion 13 and lie substantially in planes passing through the axis of extension 7. Preferably, the ribs 22 also extend on the bottom portion 13. In the preferred embodiments illustrated, more precisely, some ribs 22 extend over radial stretches (with reference to the axis of extension 7) on the bottom portion 13 whilst other ribs 22 extend over annular stretches about the axis of extension 7. The ribs 22 with annular extension and radial extension may meet one another, as shown in Figures 1 and 4. Some ribs 22 of the bottom portion 13 which extend radially may also extend from the ribs 22 of the side portion 20.

In the embodiments illustrated, the ribs 22 of the side portion 20 extend on the rings 21 and on the outer steps in which the side portion 20 is structured and they project radially relative to the latter, creating an overall frusto-conical shape: in other words, each rib 22 is angled in such a way that, proceeding from the rim 12 towards the bottom portion 13 of the filter 10, the distance between its outer surface and the capsule 1 axis of extension 7 is reduced, and therefore, the distance between it and the side wall 4 is increased.

In the preferred embodiments the ribs 22 do not make contact with the capsule 1 body 2, except at the coupling portion 14. However, in general the filter 10 may be in contact with the capsule 1 body 2 even at various points other than the coupling portion 14, provided that there is no interruption in the fluid communication both through the filter 10 and with the beverage outfeed zone through the lower wall 3. Therefore, in some embodiments, one or more of the ribs 22 present on the side portion 20 and/or on the bottom portion 13 may be in contact with the capsule 1 body 2: for example the longitudinal ribs 22 present on the side portion 20 could be in contact at one or more points with the side wall 4 located between the coupling portion 14 and the lower wall 3, whilst between one rib 22 and another the filter 10 is distanced from the side wall 4.

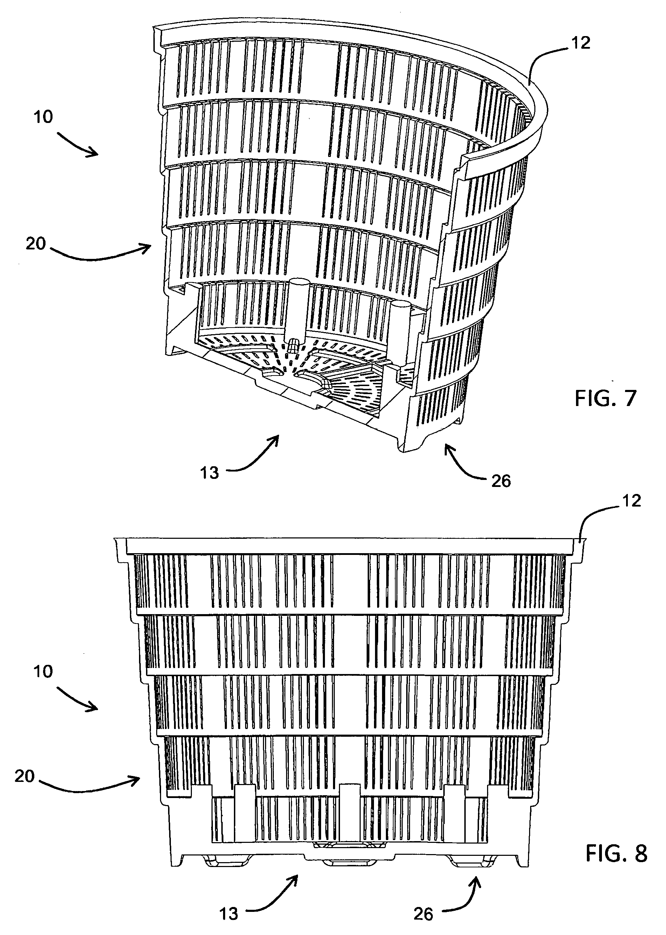

Finally, Figures 6 to 8 show a further alternative embodiment of the filter 10 which is advantageously applied in cases in which at least a perimetric edge 26 of the bottom portion 13 (which in the case illustrated corresponds to the connecting zone between the side portion 20 and the bottom portion 13 of the filter 10) projects towards the lower wall 3 relative to the self-same bottom portion 13, and in use is made to rest against a different element of the capsule 1. In particular, it may for example be the case that the perimetric edge 26 rests on an additional filter element (not illustrated) positioned in the inner chamber of the capsule 1 between the filter 10 and the lower wall 3 for in use intercepting the beverage which comes out of the filter 10 and flows towards the lower wall 3. In this case, advantageously the additional filter element comprises at least one layer of flexible filtering material and is coupled to the inner part of the outer body 2. Preferably, the additional filter element will also have the shape of a disk positioned transversally to the axis of extension 7.

As shown in Figures 6 to 8, in this embodiment the perimetric edge 26 has a notched profile in such a way as to guarantee non-continuous contact with the different element on which it rests. In this way, it is possible to guarantee that the flow of beverage coming out of the openings 11 made in the lateral portion of the filter can reach any part of the additional filter element, making full use of its potential.

It should be noticed that if an additional filter element is being used in combination with the filter 10, it is appropriate that all of the openings 11 be of a size such that they act as a filter for the powdered food substance, to retain it at least when it is larger than a predetermined particle size (the size usually being selected so that it is less than the nominal size of the powdered substance).

As indicated, the capsule 1 is suitable for use in a beverage making system based on capsules which comprises water injecting means that can be associated with the capsule 1 lid 6 and beverage extracting means which can be associated with the lower wall 3 of the capsule 1. In particular, in the preferred embodiments, an injecting element 8 which pierces the lid 6 is used to inject the water into the first compartment 15 which contains the powdered food substance. The water interacts with the powdered food substance, making the beverage which, driven by the water flow (which may be pressurised), passes through the powder, covering stretches of it until it reaches the openings 11 present in the filter 10. While the powdered food substance at least mainly remains confined in the first compartment 15, the beverage passes through the openings 11 from the first compartment 15 to the second compartment 16, where it can come out of the capsule 1 after the action of the piercing element 9 which penetrates the lower wall 3. Depending on the type of beverage making system, the beverage may come out through the hole left by the piercing element 9 or through a channel present in said element.

This invention brings important advantages.

The presence of the openings in the surface of the filter located at the portion of the second compartment positioned between the filter and the side wall of the capsule body allows a reduction in the average distance that the water must cover through the powdered food substance in order to be able to come out of the filter. For example, the beverage made close to the lid is not forced to pass through substantially all of the powdered food substance in order to be able to come out through the bottom portion of the filter, but can come out through the above-mentioned openings closest to it. In that way, the beverage encounters less resistance during its movement. Moreover, in that way, the risk of the formation of highly compacted areas linked to the substantially unidirectional flow of water and beverage is reduced. In this way, while the beverage is being made the powdered food substance maintains substantially even compactness, consequently reducing the risk of the formation of preferential water flow channels, and the water can therefore permeate the food substance more evenly and homogeneously, leading to an increase in the quality of the beverage made.

Added to that is the fact that the filter of the capsule which is the subject of this invention, thanks to its shape and the presence of the above-mentioned openings, comprises a filtering surface greater than that of a common flat filter (the dimensions of the capsule being the same), while keeping the quantity of powdered food substance contained in it substantially unchanged. That allows improved filtering of the beverage.

Finally, it should be noticed that this invention is relatively easy to produce and that even the cost linked to implementing the invention is not very high.

The invention described above may be modified and adapted in several ways without thereby departing from the scope of the claims Moreover, the shapes and dimensions of the various components, may vary according to requirements.

## Claims

1. A capsule (1) for making beverages comprising at least one powdered food substance which can be extracted by passing water through it to make a beverage, comprising:
a substantially cup-shaped body (2) which in turn comprises a lower wall (3) and a side wall (4);
a lid (6) fixed to the body (2) at an edge (5) of the side wall (4) located on the opposite side to the lower wall (3), between the lid (6) and the Inner surface of the body (2) there also being a chamber and between a central point of the lid (6) and a central point of the lower wall (3) being Identified a capsule (1) axis of extension (7);
a rigid or semi-rigid filter (10) positioned In the chamber and coupled to the capsule (1) body (2) at a coupling portion (14) which is substantially annular about the axis of extension (7) and located on the side wall (4), said filter (10) comprising openings (11) to allow fluid communication through it;
**characterised in that**
the filter (10) extends between a substantially annular rim (12) located at the top of the filter (10) and positioned close to the capsule (1) lid (6), and a bottom portion (13) located at the bottom of the filter (10) and positioned close to the lower wall (3),
the coupling portion (14) being located close to the edge (5) of the side wall (4) and the filter (10) being coupled to the coupling portion (14) substantially at the rim (12);
and **In that**
the filter (10) substantially separates the chamber into a first compartment (15) in which the powered food substance is contained and a second compartment (16),
said first compartment (15) being delimited at least between the filter (10) and the lid (6), and said second compartment (16) being delimited between the filter (10), the lower wall (3) and the portion of the side wall (4) located between the lower wall (3) and the coupling portion (14), at least part of the second compartment (16) being positioned between the side wall (4) and the filter (10) and the second compartment (16) extending along the side wall (4) at least over most of the distance between the coupling portion (14) and the lower wall (3) measured parallel with the axis of extension (7), said openings (11) being made at least at the part of the second compartment (16) positioned between the filter (10) and the side wall (4);
the distance between the filter (10) and the side wall (4) at the second compartment (16) increases proceeding towards the bottom portion (13)
the filter (10) is substantially cup-shaped and comprises a side portion (20) extending between the bottom portion (13) and the rim (12) about the axis of extension (7), said openings (11) being located at least on the side portion (20); said capsule being **characterised in that**
the side portion (20) of the filter (10) has the structure of superposed rings (21), which are concentric about the axis of extension (7) and are connected to each other, each of the rings (21), proceeding from the rim (12) towards the bottom portion (13) of the filter (10), delimiting a respective section of the first compartment (15), in a plane substantially perpendicular to the axis of extension (7), having an area greater than that delimited by the next ring (21).

2. The capsule according to the preceding claim, **characterised in that** the second compartment (16) extends along the side wall (4) to the coupling portion (14).

3. The capsule according to claim 1 or 2, **characterised in that** the filter (10) is coupled to the coupling portion (14) by mechanical interference.

4. The capsule according to claim 1 or 2 or 3, **characterised in that** the filter (10) is coupled to the coupling portion (14) by creating a sealed contact with it.

5. The capsule according to any of the preceding claims, **characterised in that**, close to the rim (12), the filter (10) comprises a shoulder (17) which is substantially annular about the axis of extension (7) and which projects radially relative to the rest of the filter (10) with reference to the axis of extension (7), and **in that** the coupling portion (14) comprises a counter-shoulder (18) which is substantially annular about the axis of extension (7) and also projects radially, with reference to the axis of extension (7), relative to the portion of side wall (4) adjacent to it on the lower wall (3) side, said shoulder (17) resting on the counter-shoulder (18) and said rim (12) being coupled to an annular region (19) of the coupling portion (14) located between the counter-shoulder (18) and the edge (5).

6. The capsule according to claims 3 and 5, **characterised in that** the coupling by mechanical interference is created between the rim (12) of the filter (10) and the annular region (19) of the coupling portion (14).

7. The capsule according to claims 4 and 5 or 4 and 6, **characterised in that** the sealed contact is created between the rim (12) of the filter (10) and the annular region (19) of the coupling portion (14).

8. The capsule according to any of the preceding claims, **characterised in that** the bottom portion (13) of the filter (10) is spaced from the lower wall (3) to allow, during use, insertion of a piercing element (9) in the capsule (1), through the lower wall (3), without the bottom portion (13) of the filter (10) being damaged.

9. The capsule according to claim 8, wherein the bottom portion (13) comprises an outer annular zone (23) and an inner zone (24), the outer annular zone (23) being separated from the lower wall (3) to allow, during use, insertion of a piercing element in the capsule (1), through the lower wall (3), without the bottom portion (13) of the filter (10) being damaged, the inner zone (24) in contrast being close to the lower wall (3).

10. The capsule according to claim 1, **characterised in that** the side portion (20) of the filter (10), seen in radial section relative to the axis of extension (7), comprises, on the side facing towards the first compartment (15), a profile substantially formed by steps corresponding to said rings (21).

11. The capsule according to claim 10, **characterised in that** there are several of said openings (11) located on each of the rings (21).

12. The capsule according to any of the claims from 9 to 11, **characterised in that** the bottom portion (13) of the filter (10) mainly comprises a flat disk extending in a substantially circular fashion about the axis of extension (7).

13. The capsule according to any of the preceding claims, **characterised in that** the filter (10) comprises stiffening ribs (22).

14. The capsule according to claim 13, **characterised in that** the ribs (22) are at least located on the side portion (20) of the filter (10), said ribs (22) extending longitudinally from the rim (12) at least to the bottom portion (13) and substantially lying in planes passing through the axis of extension (7).

15. The capsule according to any of the preceding claims, **characterised in that** the lower wall (3) can be pierced during use to allow the beverage to come out of the capsule (1), and also being **characterised in that**, during use, a piercing element (9) can be inserted in the second compartment (16), without damaging the filter (10), following penetration through the lower wall (3).

16. The capsule according to any one of the preceding claims, **characterised in that** it also comprises an additional filter element positioned in the chamber between the filter (10) and the lower wall (3) for in use intercepting the beverage coming out of the filter (10) and flowing towards the lower wall (3), the additional filter element comprising at least one layer of flexible filtering material and being coupled to the inner part of the outer body (2), and **in that** the bottom portion (13) comprises a perimetric edge (26) projecting towards the lower wall (3) relative to the rest of the self-same bottom portion (13) and resting on the additional filter element, the perimetric edge (26) having a notched profile in such a way as to guarantee non-continuous contact with the additional filter element.

17. The capsule according to any one of the preceding claims, **characterised in that** the same ring (21) delimits various sections of the first compartment (15), in a plane substantially perpendicular to the axis of extension (7), which have decreasing areas proceeding in the direction from the rim (12) towards the bottom portion (13).

## Patentansprüche

1. Eine Kapsel (1) zur Zubereitung von Getränken, enthaltend wenigstens eine pulverisierte Lebensmittelsubstanz, welche durch den Durchlauf von Wasser durch diese extrahiert werden kann, um ein Getränk herzustellen, enthaltend:
einen im wesentlichen schalenförmigen Körper (2), welcher wiederum eine untere Bodenwand (3) und eine Seitenwand (4) enthält;
einen an dem Körper (2), an der Kante (5) der Seitenwand (4) befestigten Deckel (6), angeordnet an der entgegengesetzten Seite zu der unteren Bodenwand (3), wobei sich zwischen dem Deckel (6) und der inneren Oberfläche des Körpers (2) auch eine Kammer befindet, und zwischen einem mittleren Punkt des Deckels (6) und einem mittleren Punkt der unteren Bodenwand (3) eine Ausdehnungsachse (7) der Kapsel (1) gebildet wird;
einen starren oder halbstarren Filter (10), positioniert in der Kammer und angeschlossen an den Körper (2) der Kapsel (1) an einem Verbindungsabschnitt (14), welcher im wesentlichen ringförmig um die Ausdehnungsachse (7) verläuft und an der Seitenwand (4) angeordnet ist, wobei der genannte Filter (10) Öffnungen (11) enthält, um durch ihn eine Strömungsverbindung zu erlauben
**dadurch gekennzeichnet, dass**
der Filter (10) sich zwischen einem im wesentlichen ringförmigen Rand (12), angeordnet am oberen Ende des Filters (10) und positioniert dicht an dem Deckel (6) der Kapsel (1), und einem unteren Abschnitt (13) erstreckt, der am unteren Teil des Filters (10) und dicht an der unteren Bodenwand (3) positioniert ist;
der Verbindungsabschnitt (14) dicht an der Kante (5) der Seitenwand (4) angeordnet und der Filter (10) mit dem Verbindungsabschnitt (14) im wesentlichen an dem Rand (12) verbunden ist;
und dadurch, dass
der Filter (10) die Kammer im wesentlichen in einen ersten Raum (15), in welchem die pulverisierte Lebensmittelsubstanz enthalten ist, und einen zweiten Raum (16) unterteilt;
wobei der genannte erste Raum (15) wenigstens zwischen dem Filter (10) und dem Deckel (6) abgegrenzt ist, und
wobei der genannte zweite Raum (16) zwischen dem Filter (10), der unteren Bodenwand (3) und dem Abschnitt der Seitenwand (4), der sich zwischen der unteren Bodenwand (3) und dem Verbindungsabschnitt (14) befindet, abgegrenzt ist, wobei sich wenigstens ein Teil des zweiten Raumes (16) zwischen der Seitenwand (4) und dem Filter (10) befindet und der zweite Raum (16) sich entlang der Seitenwand (4) wenigstens über den grössten Teil des Abstandes zwischen dem Verbindungsabschnitt (14) und der unteren Bodenwand (3) erstreckt, gemessen parallel zu der Ausdehnungsachse (7), wobei die genannten Öffnungen (11) wenigstens in dem Teil des zweiten Raumes (16) hergestellt sind, der sich zwischen dem Filter (10) und der Seitenwand (4) befindet;
der Abstand zwischen dem Filter (10) und der Seitenwand (4) in dem zweiten Raum (16) zu dem unteren Abschnitt (13) hin zunimmt;
der Filter (10) im wesentlichen schalenförmig ist und einen Seitenabschnitt (20) enthält, der sich zwischen dem unteren Abschnitt (13) und dem Rand (12) um die Ausdehnungsachse (7) erstreckt, wobei die genannten Öffnungen (11) wenigstens an dem Seitenabschnitt (20) angeordnet sind; wobei die genannte Kapsel **dadurch gekennzeichnet ist, dass**
der Seitenabschnitt (20) des Filters (10) eine Struktur aus übereinander angeordneten Ringen (21) hat, welche sich konzentrisch um die Ausdehnungsachse (7) erstrecken und miteinander verbunden sind, das heisst jeder der Ringe (21), wobei sie vom Rand (12) aus in Richtung des unteren Abschnitts (13) des Filters (10) verlaufen und einen jeweiligen Abschnitt des ersten Raumes (15) abgrenzen, und zwar in einer Ebene im wesentlichen lotrecht zu der Ausdehnungsachse (7) und dabei einen grösseren Bereich haben als der durch den nächsten Ring (21) abgegrenzte.

2. Kapsel nach dem vorstehenden Patentanspruch, **dadurch gekennzeichnet, dass** der zweite Raum (16) sich entlang der Seitenwand (4) bis zu dem Verbindungsabschnitt (14) erstreckt.

3. Kapsel nach Patentanspruch 1 oder 2, **dadurch gekennzeichnet, dass** der Filter (10) an den Verbindungsabschnitt (14) durch mechanische Eingriffe angeschlossen ist.

4. Kapsel nach Patentanspruch 1 oder 2 oder 3, **dadurch gekennzeichnet, dass** der Filter (10) an den Verbindungsabschnitt (14) angeschlossen ist, und zwar durch Herstellung eines dicht abschliessenden Kontaktes mit diesem.

5. Kapsel nach einem jeden der vorstehenden Patentansprüche, **dadurch gekennzeichnet, dass** dicht an dem Rand (12) der Filter (10) eine Schulter (17) enthält, welche im wesentlichen ringförmig um die Ausdehnungsachse (7) verläuft, und welche im Verhältnis zu dem restlichen Filter (10) unter Bezugnahme auf die Ausdehnungsachse (7) radial hervorsteht, **und dadurch,** dass der Verbindungsabschnitt (14) eine Gegenschulter (18) enthält, die im wesentlichen ringförmig um die Ausdehnungsachse (7) verläuft und unter Bezugnahme auf die Ausdehnungsachse (7), im Verhältnis zu dem auf der Seite der unteren Bodenwand (3) angrenzenden Abschnitt der Seitenwand (4), ebenfalls radial hervorsteht, wobei die genannte Schulter (17) an der Gegenschulter (18) anliegt, und wobei der genannte Rand (12) an einen ringförmigen Bereich (19) des Verbindungsabschnittes (14) angeschlossen ist, der sich zwischen der Gegenschulter (18) und der Kante (5) befindet.

6. Kapsel nach den Patentansprüchen 3 und 5, **dadurch gekennzeichnet, dass** die Verbindung zwischen dem Rand (12) des Filters (10) und dem ringförmigen Bereich (19) des Verbindungsabschnittes (14) durch mechanische Eingriffe hergestellt ist.

7. Kapsel nach den Patentansprüchen 4 und 5 oder 4 und 6, **dadurch gekennzeichnet, dass** der abgedichtete Kontakt zwischen dem Rand (12) des Filters (10) und dem ringförmigen Bereich (19) des Verbindungsabschnittes (14) hergestellt ist.

8. Kapsel nach einem jeden der vorstehenden Patentansprüche, **dadurch gekennzeichnet, dass** der untere Abschnitt (13) des Filters (10) von der unteren Bodenwand (3) abstehend ist, um während des Betriebes das Einschieben eines Perforationselementes (9) in die Kapsel (1) zu erlauben, und zwar durch die untere Bodenwand (3), ohne dass der untere Abschnitt (13) des Filters (10) beschädigt wird.

9. Kapsel nach Patentanspruch 8, bei welcher der untere Abschnitt (13) einen äusseren ringförmigen Bereich (23) und einen inneren Bereich (24) enthält, wobei der äussere ringförmige Bereich (23) von der unteren Bodenwand (3) getrennt ist, um während des Betriebes das Einschieben eines Perforationselementes in die Kapsel (1) zu erlauben, und zwar durch die untere Bodenwand (3), ohne dass der untere Abschnitt (13) des Filters (10) beschädigt wird, wobei sich der innere Bereich (24) dagegen dicht an der unteren Bodenwand (3) befindet.

10. Kapsel nach Patentanspruch 1, **dadurch gekennzeichnet, dass** der Seitenabschnitt (20) des Filters (10), im radialen Schnitt im Verhältnis zu der Ausdehnungsachse (7) gesehen, auf der dem ersten Raum (15) zugewandten Seite ein Profil aufweist, das im wesentlichen durch Absätze geformt ist, die den genannten Ringen (21) entsprechen.

11. Kapsel nach Patentanspruch 10, **dadurch gekennzeichnet, dass** einige der genannten Öffnungen (11) an einem jeden der Ringe (21) vorhanden sind.

12. Kapsel nach einem jeden der Patentansprüche von 9 bis 11, **dadurch gekennzeichnet, dass** der untere Abschnitt (13) des Filters (10) hauptsächlich eine flache Scheibe enthält, die sich in einer im wesentlichen kreisförmigen Weise um die Ausdehnungsachse (7) erstreckt.

13. Kapsel nach einem jeden der vorstehenden Patentansprüche, **dadurch gekennzeichnet, dass** der Filter (10) Versteifungsrippen (22) enthält.

14. Kapsel nach Patentanspruch 13. **dadurch gekennzeichnet, dass** die Rippen (22) wenigstens an dem Seitenabschnitt (20) des Filters (10) angeordnet sind, wobei die genannten Rippen (22) sich längs von dem Rand (12) aus wenigstens bis zu dem unteren Abschnitt (13) erstrecken und im wesentlichen auf Ebenen liegen, die durch die Ausdehnungsachse (7) verlaufen.

15. Kapsel nach einem jeden der vorstehenden Patentansprüche, **dadurch gekennzeichnet, dass** die untere Bodenwand (3) während des Betriebes durchstochen werden kann, um das Auslaufen des Getränkes aus der Kapsel (1) zu erlauben, und ebenfalls **dadurch gekennzeichnet, dass** während des Betriebes ein Perforationselement (9) in den zweiten Raum (16) eingeschoben werden kann, ohne den Filter (10) infolge der Penetration durch die untere Bodenwand (3) zu beschädigen.

16. Kapsel nach einem jeden der vorstehenden Patentansprüche, **dadurch gekennzeichnet, dass** sie ebenfalls ein zusätzliches Filterelement enthält, positioniert in der Kammer zwischen dem Filter (10) und der unteren Bodenwand (3), um während des Betriebes das aus dem Filter (10) auslaufende und zu der unteren Bodenwand (3) fliessende Getränk aufzufangen, wobei das zusätzliche Filterelement wenigstens eine Lage aus flexiblem Filtermaterial enthält und an den inneren Teil des äusseren Körpers (2) angeschlossen ist, und **dadurch,** dass der untere Abschnitt (13) einen umlaufenden Rand (26) enthält, der zu der unteren Bodenwand (3) hin im Verhältnis zu dem Rest des unteren Abschnittes (13) selbst hervorsteht und auf dem zusätzlichen Filterelement liegt, wobei der umlaufende Rand (26) ein gezahntes Profil auf solche Weise aufweist, dass ein nicht kontinuierlicher Kontakt mit dem zusätzlichen Filterelement gewährleistet ist.

17. Kapsel nach einem jeden der vorstehenden Patentansprüche, **dadurch gekennzeichnet, dass** derselbe Ring (21) verschiedene Abschnitte des ersten Raumes (15) abgrenzt, und zwar in einer Ebene im wesentlichen lotrecht zu der Ausdehnungsachse (7), welche abnehmende Bereiche in Richtung vom Rand (12) bis zu dem unteren Abschnitt (13) hin haben.

## Revendications

1. Une capsule (1) permettant de réaliser des boissons comprenant au moins une substance alimentaire en poudre qui peut être extraite en faisant passer de l'eau à travers elle pour réaliser une boisson, comprenant :
un corps essentiellement en forme de coupe (2) qui comprend à son tour une paroi inférieure (3) et une paroi latérale (4) ;
un couvercle (6) fixé au corps (2) au niveau d'un bord (5) de la paroi latérale (4) situé du côté opposé par rapport à la paroi inférieure (3), une chambre étant également présente entre le couvercle (6) et la surface intérieure du corps (2) et un axe d'extension (7) de la capsule (1) étant identifié entre un point central du couvercle (6) et un point central de la paroi inférieure (3) ;
un filtre rigide ou semi-rigide (10) positionné dans la chambre et accouplé avec le corps (2) de la capsule (1) au niveau d'une portion d'accouplement (14) qui est essentiellement annulaire autour de l'axe d'extension (7) et située sur la paroi latérale (4), ledit filtre (10) comprenant des ouvertures (11) pour permettre une communication de fluide à travers celui-ci ;
**caractérisée en ce que**
le filtre (10) s'étend entre un rebord (12) essentiellement annulaire situé en haut du filtre (10) et positionné à proximité du couvercle (6) de la capsule (1), et une portion de fond (13) située en bas du filtre (10) et positionnée à proximité de la paroi inférieure (3),
la portion d'accouplement (14) étant située à proximité du bord (5) de la paroi latérale (4) et le filtre (10) étant accouplé avec la portion d'accouplement (14) essentiellement au niveau du rebord (12) ;
et **en ce que**
le filtre (10) sépare essentiellement la chambre en un premier compartiment (15) dans lequel la substance alimentaire en poudre est contenue et un deuxième compartiment (16),
ledit premier compartiment (15) étant délimité au moins entre le filtre (10) et le couvercle (6), et ledit deuxième compartiment (16) étant délimité entre le filtre (10), la paroi inférieure (3) et la portion de la paroi latérale (4) située entre la paroi inférieure (3) et la portion d'accouplement (14), au moins une partie du deuxième compartiment (16) étant positionnée entre la paroi latérale (4) et le filtre (10) et le deuxième compartiment (16) s'étendant le long de la paroi latérale (4) au moins sur la plus grande partie de la distance entre la portion d'accouplement (14) et la paroi inférieure (3) mesurée parallèlement à l'axe d'extension (7), lesdites ouvertures (11) étant pratiquées au moins au niveau de la partie du deuxième compartiment (16) positionnée entre le filtre (10) et la paroi latérale (4) ;
la distance entre le filtre (10) et la paroi latérale (4) au niveau du deuxième compartiment (16) augmente au fur et à mesure que l'on va vers la portion de fond (13) ;
le filtre (10) est essentiellement en forme de coupe et comprend une portion latérale (20) s'étendant entre la portion de fond (13) et le rebord (12) autour de l'axe d'extension (7), lesdites ouvertures (11) étant situées au moins sur la portion latérale (20) ;
ladite capsule étant **caractérisée en ce que** la portion latérale (20) du filtre (10) est structurée en anneaux superposés (21), qui sont concentriques autour de l'axe d'extension (7) et sont raccordés les uns aux autres, chacun des anneaux (21), en allant du rebord (12) vers la portion de fond (13) du filtre (10), délimitant une section respective du premier compartiment (15), dans un plan essentiellement perpendiculaire à l'axe d'extension (7), ayant une superficie supérieure à celle délimitée par l'anneau suivant (21).

2. La capsule selon la revendication précédente, **caractérisée en ce que** le deuxième compartiment (16) s'étend le long de la paroi latérale (4) jusqu'à la portion d'accouplement (14).

3. La capsule selon la revendication 1 ou 2, **caractérisée en ce que** le filtre (10) est accouplé avec la portion d'accouplement (14) par interférence mécanique.

4. La capsule selon la revendication 1 ou 2 ou 3, **caractérisée en ce que** le filtre (10) est accouplé avec la portion d'accouplement (14) en créant un contact étanche avec celle-ci.

5. La capsule selon l'une quelconque des revendications précédentes, **caractérisée en ce que**, à proximité du rebord (12), le filtre (10) comprend un épaulement (17) qui est essentiellement annulaire autour de l'axe d'extension (7) et qui dépasse radialement par rapport au reste du filtre (10) en se référant à l'axe d'extension (7), et **en ce que** la portion d'accouplement (14) comprend un contre-épaulement (18) qui est essentiellement annulaire autour de l'axe d'extension (7) et dépasse lui aussi radialement, en se référant à l'axe d'extension (7), par rapport à la portion de paroi latérale (4) qui lui est adjacente du côté de la paroi inférieure (3), ledit épaulement (17) étant en appui sur le contre-épaulement (18) et ledit rebord (12) étant accouplé avec une région annulaire (19) de la portion d'accouplement (14) située entre le contre-épaulement (18) et le bord (5).

6. La capsule selon les revendications 3 et 5, **caractérisée en ce que** l'accouplement par interférence mécanique est créé entre le rebord (12) du filtre (10) et la région annulaire (19) de la portion d'accouplement (14).

7. La capsule selon les revendications 4 et 5 ou 4 et 6, **caractérisée en ce que** le contact étanche est créé entre le rebord (12) du filtre (10) et la région annulaire (19) de la portion d'accouplement (14).

8. La capsule selon l'une quelconque des revendications précédentes, **caractérisée en ce que** la portion de fond (13) du filtre (10) est espacée de la paroi inférieure (3) pour permettre, pendant l'utilisation, l'insertion d'un élément de perforation (9) dans la capsule (1), à travers la paroi inférieure (3), sans que la portion de fond (13) du filtre (10) soit endommagée.

9. La capsule selon la revendication 8, dans laquelle la portion de fond (13) comprend une zone annulaire extérieure (23) et une zone intérieure (24), la zone annulaire extérieure (23) étant séparée de la paroi inférieure (3) pour permettre, pendant l'utilisation, l'insertion d'un élément de perforation dans la capsule (1), à travers la paroi inférieure (3), sans que la portion de fond (13) du filtre (10) soit endommagée, la zone intérieure (24) étant en revanche à proximité de la paroi inférieure (3).

10. La capsule selon la revendication 1, **caractérisée en ce que** la portion latérale (20) du filtre (10), vue en coupe radiale par rapport à l'axe d'extension (7), comprend, sur le côté orienté vers le premier compartiment (15), un profil essentiellement formé par des degrés correspondant auxdits anneaux (21).

11. La capsule selon la revendication 10, **caractérisée en ce qu'**il y a plusieurs desdites ouvertures (11) situées sur chacun des anneaux (21).

12. La capsule selon l'une quelconque des revendications de 9 à 11, **caractérisée en ce que** la portion de fond (13) du filtre (10) comprend principalement un disque plat s'étendant de façon essentiellement circulaire autour de l'axe d'extension (7).

13. La capsule selon l'une quelconque des revendications précédentes, **caractérisée en ce que** le filtre (10) comprend des nervures de renforcement (22).

14. La capsule selon la revendication 13, **caractérisée en ce que** les nervures (22) sont au moins situées sur la portion latérale (20) du filtre (10), lesdites nervures (22) s'étendant longitudinalement depuis le rebord (12) jusqu'à au moins la portion de fond (13) et reposant essentiellement dans des plans passant par l'axe d'extension (7).

15. La capsule selon l'une quelconque des revendications précédentes, **caractérisée en ce que** la paroi inférieure (3) peut être perforée pendant l'utilisation pour permettre à la boisson de sortir de la capsule (1), et étant aussi **caractérisée en ce que**, pendant l'utilisation, un élément de perforation (9) peut être inséré dans le deuxième compartiment (16), sans endommager le filtre (10), suite à la pénétration à travers la paroi inférieure (3).

16. La capsule selon l'une quelconque des revendications précédentes, **caractérisée en ce qu'**elle comprend aussi un élément de filtre supplémentaire positionné dans la chambre entre le filtre (10) et la paroi inférieure (3) pour intercepter en utilisation la boisson qui sort du filtre (10) et s'écoule vers la paroi inférieure (3), l'élément de filtre supplémentaire comprenant au moins une couche de matériau filtrant flexible et étant accouplé avec la partie intérieure du corps extérieur (2), et **en ce que** la portion de fond (13) comprend un bord périmétrique (26) saillant vers la paroi inférieure (3) par rapport au reste de cette même portion de fond (13) et en appui sur l'élément de filtre supplémentaire, le bord périmétrique (26) ayant un profil dentelé de manière à garantir un contact non continu avec l'élément de filtre supplémentaire.

17. La capsule selon l'une quelconque des revendications précédentes, **caractérisée en ce que** le même anneau (21) délimite plusieurs sections du premier compartiment (15), dans un plan essentiellement perpendiculaire à l'axe d'extension (7), qui ont des superficies décroissantes en allant dans la direction du rebord (12) vers la portion de fond (13).
